# EUROPEAN PATENT APPLICATION

(11) **EP 4 427 977 A1**
(43) Date of publication of application: **11.09.2024**
(21) Application number: 23160230.1
(22) Date of filing: 06.03.2023
(51) Int. Cl.: B60L 58/16

(54) **METHOD FOR CONTROLLING CHARGING OF AN ENERGY SYSTEM IN A VEHICLE**

(71) Applicant: VOLVO TRUCK CORPORATION, 405 08 Göteborg (SE)
(72) Inventor: Wilhelmsson, Martin, 416 73 GÖTEBORG (SE); Bjernetun, Johan, 435 38 MÖLNLYCKE (SE); Eriksson, Anders, 423 49 TORSLANDA (SE)
(74) Representative: Ström & Gulliksson AB

(57) **Abstract**

A computer-implemented method (100) for automatically controlling the charging of an energy storage system (40) in an electric heavy-duty vehicle (1) is provided. The method (100) comprises determining (210), by a processor device of a computer system, a level of ECO-driving (50) of the heavy-duty vehicle (1), determining (220), by the processor device, a level of battery aging (60) of the at least one battery pack (30) in the energy storage system (40) of the heavy-duty vehicle (1), wherein said determination is based on a battery model (62), determining (230), by the processor device, a maximum allowable charging condition (70) of the at least one battery pack (30), wherein the determination is based on the level of ECO-driving (50) and the level of aging (60) of the battery pack (30) and controlling (240) the charging of the at least one battery pack (30) based on the maximum allowable charging condition (70) in order to control the aging of the battery pack (30).

## Description

### TECHNICAL FIELD

The disclosure relates generally to vehicles. In particular aspects, the disclosure relates to a computer-implemented method of controlling charging of an energy system in a vehicle. The disclosure can be applied in heavy-duty vehicles, such as trucks, buses, and construction equipment. The disclosure can be used in autonomous vehicles, as well as in driver controlled vehicles. Although the disclosure may be described with respect to a particular vehicle, the disclosure is not restricted to any particular vehicle.

### BACKGROUND

Vehicles are normally equipped with one or more sub-systems requiring electrical power. In modern vehicles these electric sub-systems are typically propulsion systems whereby the vehicle is either an electrically driven vehicle (i.e. a fully electric vehicle) or a hybrid vehicle (i.e. the driving force is either provided by an electric motor, an internal combustion engine, or both). Within the context of this disclosure, both types are considered being electric vehicles.

Battery energy storage systems are installed in the vehicle in order to provide the required electrical energy to the one or more electrical motors. The battery energy storage system of a modern vehicle typically comprises one battery pack, however a plurality of battery packs may be used in some applications. Each battery pack comprises a plurality of battery modules, and each battery module comprises a plurality of battery cells.

A battery management system is normally connected to the one or more battery packs in order to control energy flow to and from the battery cells. Modern battery management systems are typically also configured to monitor the battery cells in order to determine how much life the battery cells have remaining.

Battery energy storage systems age differently depending on multiple factors, including for example the usage, charging, and ambient conditions. This may cause several problems, for example in estimating when a battery needs to be changed.

Based on above, there is a need for improved solutions for battery management systems and methods providing improved usability of the associated vehicle.

### SUMMARY

According to a first aspect of the disclosure, a computer system comprising a processor device is provided. The processor device is configured to determining, by a processor device of a computer system, a level of ECO-driving of the heavy-duty vehicle, determining, by the processor device, a level of battery aging of an energy storage system of the heavy-duty vehicle, wherein said determination is based on a battery model, determining, by the processor device, a maximum allowable charging condition of the energy storage system, wherein the determination is based on the level of ECO-driving and the level of aging of the energy storage system and controlling the charging of the energy storage system based on the maximum allowable charging condition in order to control the aging of the energy storage system.

The first aspect of the disclosure may seek to solve the problem of different battery packs aging in different time lines. The problem may also be formulated as minimizing the charging times without increasing the total battery ageing rate. A technical benefit may include achieving a method that controls the charging condition of the vehicle based on how energy economically the driver is using the vehicle. This is achieved by the first aspect of the disclosure.

According to a second aspect, computer-implemented method for automatically controlling the charging of an energy storage system in an electric heavy-duty vehicle is provided. The method comprises determining, by a processor device of a computer system, a level of ECO-driving of the heavy-duty vehicle, determining, by the processor device, a level of battery aging of the energy storage system of the heavy-duty vehicle, wherein said determination is based on a battery model, determining, by the processor device, a maximum allowable charging condition of the energy storage system, wherein the determination is based on the level of ECO-driving and the level of aging of the energy storage system and controlling the charging of the energy storage system based on the maximum allowable charging condition in order to control the aging of the energy storage system.

When charging an electrical vehicle, it is good for the driver if the charging time is short. In order to keep charging times short it is also preferred by the user if a high charging power can be used. This enables a quick transfer of a large amount of energy from the charging station to the batteries in the vehicle. However, charging batteries with high power causes the batteries to age quicker. Driving a vehicle in an energy economical way (e.g. using eco-driving) causes a slower aging of the batteries than driving in a normal non eco-driving way. Hence, by evaluating the aging caused by high charging power and the aging caused by driving it is possible to optimize a charging condition for that specific vehicle. The first and second aspect of the disclosure thus provides a method to evaluate to which degree the battery energy has been used in an energy economical way and in a way that does not age the batteries more than necessary and based on this allowing a higher charging rate if the energy has been used as economically as possible.

In some examples, including in at least one preferred example, optionally the maximum allowable charging condition of the energy storage system comprises the maximum allowable charging power of the energy storage system and/or a minimum allowable charging time of the energy storage system. A technical benefit may include that the user can use the maximum allowable charging power of a battery pack of the energy storage system and/or a minimum allowable charging time of a battery pack of the energy storage system based on his/her use of ECO-driving.

In some examples, including in at least one preferred example, optionally the battery model is at least obtained in dependence of historical data of the usage of the energy storage system and/or statistical data of the usage of the energy storage system. A technical benefit may include gaining a benefit of gaining access to maximum allowable charging condition depending on how the battery has been used.

In some examples, including in at least one preferred example, optionally, the battery model comprises data relating to health information of the energy storage system, and/or charging information of the energy storage system. A technical benefit may include gaining a benefit of gaining access to maximum allowable charging condition depending on how the battery has been used, such as gaining a benefit of fast charging if the health of the battery is good.

In some examples, including in at least one preferred example, optionally the battery model is continuously updated. A technical benefit may include updating the model based on previous events.

In some examples, including in at least one preferred example, optionally the level of ECO-driving is based on an ECO-driving model. The ECO-driving model may at least be obtained in dependence of historical data and/or statistical data of the travelled route of the vehicle. A technical benefit may include gaining a benefit of gaining access to maximum allowable charging condition depending on how the vehicle has been driven in the past.

In some examples, including in at least one preferred example, optionally the ECO-driving model comprises data relating to road information, vehicle information and/or driving information of the travelled route of the vehicle. A technical benefit may include gaining a benefit of gaining access to maximum allowable charging condition depending on how the vehicle has been driven.

In some examples, including in at least one preferred example, optionally the ECO-driving model comprises information relating to one or more of: the number of sudden accelerations of the vehicle, number of sudden decelerations of the vehicle, frequency of sudden accelerations of the vehicle, frequency of sudden decelerations of the vehicle, sudden stop of the vehicle, and speed of the vehicle. A technical benefit may include gaining a benefit of gaining access to maximum allowable charging condition depending on how the vehicle has been driven.

In some examples, including in at least one preferred example, optionally the ECO-driving model is continuously updated. A technical benefit may include updating the model based on previous events.

In some examples, including in at least one preferred example, optionally the determination of the maximum allowable charging condition of the energy storage system is determined so that a constant aging of the energy storage system is achieved. A technical benefit may include a more predictable aging of the battery pack. Further, the aging of the battery pack may be controlled.

In some examples, including in at least one preferred example, optionally the determination of the maximum allowable charging condition of the energy storage system is determined so that a high level of ECO-driving results in a high maximum allowable charging condition and that a low level of ECO-driving results in a low maximum allowable charging condition. A technical benefit may include giving the driver a benefit when driving with a high level of ECO-driving, thus encouraging ECO-driving.

In some examples, including in at least one preferred example, optionally the energy storage system comprises at least one battery pack, and said at least one battery pack comprises at least two battery modules, and wherein said at least two battery modules each comprises at least two battery cells.

In some examples, including in at least one preferred example, optionally controlling the charging of the energy storage system is performed by instructing a charging station to provide power to the energy storage system.

In some examples, including in at least one preferred example, optionally controlling the charging of the energy storage system is performed by instructing a battery management system to allow power to the energy storage system.

In some examples, including in at least one preferred example, optionally the battery model is based on received sensor data from a battery management system.

According to a third aspect, a heavy-duty vehicle comprising a processing device configured to perform the method according to the second aspect is provided.

According to a fourth aspect, a program product comprising program code for performing, when executed by a processing device, the method according to the second aspect is provided.

According to a fifth aspect, a control system comprising one or more control units is provided. The one or more control units are configured to perform the method according to the second aspect.

According to a sixth aspect, a non-transitory computer-readable storage medium is provided. The non-transitory computer-readable storage medium comprises instructions, which when executed by the processor device, cause the processor device to perform the method of the second aspect.

The disclosed aspects, examples (including any preferred examples), and/or accompanying claims may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a heavy-duty vehicle according to one example.
**FIG. 2**-illustrates schematic views of parts of a heavy-duty vehicle according to one example.
**FIG. 3** schematically illustrates a method according to one example.
**FIGS. 4A** - **B** illustrate schematic views of parts of a heavy-duty vehicle according to one example.
**FIGS. 5A** - **B** illustrate schematic views of parts of a heavy-duty vehicle according to one example.
**FIGS. 6A** - **B** illustrate schematic views of parts of a heavy-duty vehicle according to one example.
**FIG. 7** schematically illustrates a method according to an example.
**FIG. 8** is a schematic diagram of an exemplary computer system for implementing examples disclosed herein, according to an example.

### DETAILED DESCRIPTION

Aspects set forth below represent the necessary information to enable those skilled in the art to practice the disclosure.

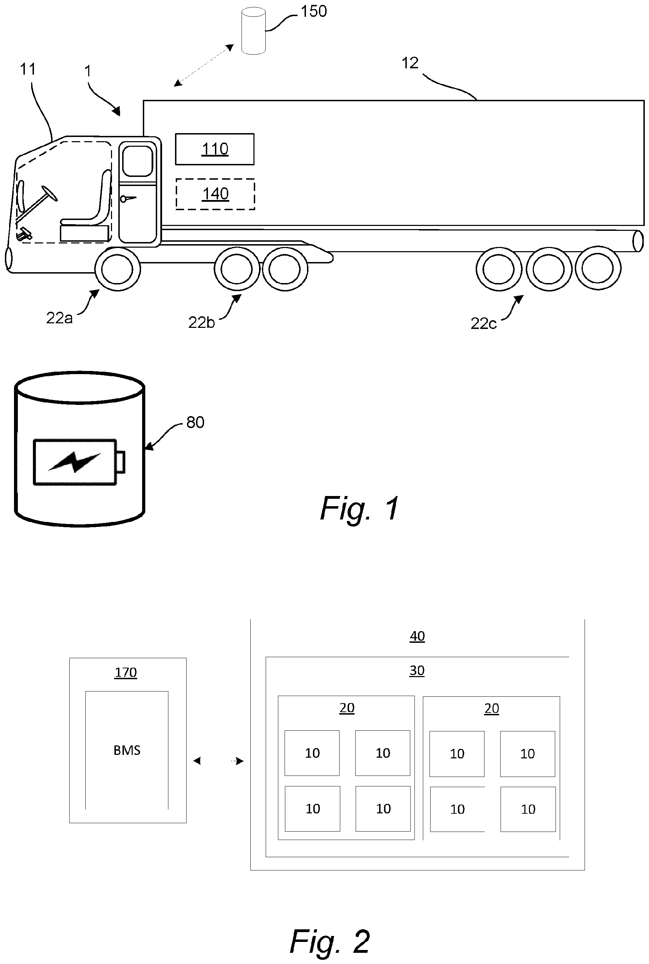

**FIG. 1** illustrates a heavy-duty vehicle **1.** This particular example comprises a tractor unit **110** which is arranged to tow a trailer unit **12.** The tractor **11** comprises a vehicle control unit (VCU) **130** arranged to control various functions of the vehicle **1.** For instance, the VCU may be arranged to perform a vehicle motion management (VMM) function comprising control of wheel slip, vehicle unit stability, and so on. The trailer unit **12** optionally also comprises a VCU **140,** which then controls one or more functions on the trailer **12.** The VCU or VCUs may be communicatively coupled, e.g., via wireless link, to a remote server **150.** This remote server may be arranged to perform various configurations of the ECU, and to provide various forms of data to the ECU **130,** such as for example providing data regarding the make and type of tires mounted on the vehicle **1.**

The vehicle combination **1** may of course also comprise additional vehicle units, such as one or more dolly units and more than one trailer unit. Although the vehicle is illustrated as a tractor unit, it should be realized that other types of vehicles may be equally considered for the purpose of the herein described method such as busses, construction equipment, trucks, etc.

The vehicle **1** is supported by wheels **22,** where each wheel comprises a tire. The tractor unit **11** has front wheels **22a** which are normally steered, and rear wheels **22b** of which at least one pair are driven wheels. Generally, the rear wheels of the tractor **11** may be mounted on tag or pusher axles. A tag axle is where the rear-most drive axle is non-powered, also referred to as a free-rolling or dead axle. A pusher axle is where the forward-most drive axle is not powered. The trailer unit **12** is supported on trailer wheels **22c.** Trailers with driven wheels, and even a steered axle, are also possible.

One of the rear axles and/or one of the axles on the trailer **12** may be a liftable axle. A lift axle, also known as a retractable axle, is an axle which can be raised so that its tires are not touching the road surface. This improves fuel economy and reduces maintenance and tire wear. It may also reduce or increase dynamic stability features of the vehicle and it can increase or decrease road wear depending on vehicle load, which axles that are lifted and in which driving situation the axle is lifted. One or more of the wheels may also be mounted with an active suspension which may be controlled by the VCU **130, 140,** e.g., in order to adjust a normal force of one or more tires.

As illustrated in **FIG. 2****,** the vehicle **1** comprises one or more battery cells **10** arranged to form one or more battery packs **30.** A specific number of battery cells **10** are arranged in a battery module **20,** and a plurality of battery modules **20** form a battery pack **30.** The one or more battery packs **30** form an energy storage system **40.** The vehicle 1 further comprises a battery management system **BMS** forming a computer system **170** as will be further described below. The battery management system **BMS** is configured to monitor and control the battery energy storage system **40** based on driver requests and vehicle operation specifics.

The battery management system **BMS** may comprise one or more sensors in order to evaluate the status of the battery cells **10,** modules **20,** packs **30** and/or the battery energy storage system **40.** The one or more sensor may for example be at least one battery cell temperature sensor **50.** The battery cell temperature sensor **50** is preferably arranged in direct contact with a battery cell **10** and is connected to the battery management system **BMS** such that sensor signals, representing the actual battery temperature of at least one battery cell **10,** are received by the battery management system **BMS.** The battery management system **BMS** may further comprise an ambient temperature sensor arranged remote from the battery cells **10,** such as at an exterior side of the battery pack **30.**

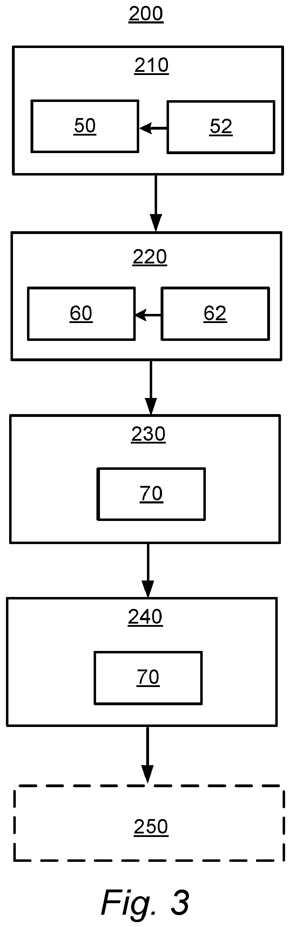

The inventors of the present invention has realized that it would be ideal if the aging of the energy storage system **40** could be controlled. More specifically, it would be beneficial if the at least one battery pack **30** of the energy storage system **40** could be controlled. In this way, it could be controlled that the batteries all age at the same rate, regardless of how the battery is used in the vehicle. For this, a method according to **FIG. 3** is provided. The method comprises determining **210** a level of ECO-driving **50** of the vehicle **1** and determining **220** a level of battery aging **60** of the at least one battery pack **30** of the vehicle. The determination of the ECO-level is preferably based on an ECO-driving model **52.** The determination of the battery level is preferably based on a battery model **62.**

The method further comprises determining **230** a maximum allowable charging condition **70** of the energy storage system **40,** and preferably determining the maxium allowable charging condition of the at least one battery pack **30** in said energy storage system **40.** The determination is based on the level of ECO-driving **50** and the level of aging **60** of the energy storage system **40** and said at least one battery pack **30.** The method further comprises controlling **24** the charging of the energy storage system **40,** comprising the at least one battery pack **30,** based on the maximum allowable charging condition **70** in order to control the aging of the energy storage system **40** (and its at least one battery pack **30).**

In some examples, controlling the charging of the at least one battery pack **30** is performed by instructing a charging station **80** to provide power to the at least one battery pack **30.** The charging station **80** may also be referred to as an electric vehicle supply equipment (EVSE) or a charge point, and supplies electrical power to the electric (fully or partly) vehicle.

In some examples, controlling the charging of the at least one battery pack **30** is performed by allowing or limit the power transmitting to the at least one battery pack **30.**

In some examples, controlling the charging of the at least one battery pack **30** is performed by instructing the battery management system **BMS** to allow power to the at least one battery pack **30.** Hence, the battery management system **BMS** at least indirectly controls the charging station.

Determining **230** a maximum allowable charging condition **70** of the at least one battery pack **30** may comprise comparing the level of ECO-driving **50** against a predetermined ECO threshold, and comparing the level of aging **60** of the battery pack **30** against a predetermined aging threshold.

The maximum allowable charging rate may be calculated using different kinds of functions. For example, the maximum allowable charging rate may be based on an evaluation of the degree to which the driver accelerates/decelerates heavily. A high occurrence of accelerates/decelerates that are performed heavily will lead to high power output/input to the batteries. Additionally, or alternatively, the maximum allowable charging rate may be based on an evaluation on the degree to which the driver uses cruise control, and/or to which degree the driver inputs correct driving route data prior to starting the transport mission.

The evaluations could for example be conducted using evaluation tables, weight functions or different types of evaluation models. The evaluation model could for example be a model designed using machine learning.

The method may further comprise comparing 250 the level of ECO-driving against a predetermined ECO threshold, and upon the level of ECO-driving being above said predetermined ECO threshold, provide a further benefit to the driver. A further benefit may relate to different aspects of the vehicle, for example better/longer guarantee conditions and/or lower electricity prices.

In other words, the method comprises a function that evaluates how energy economically the vehicle is used and how much ageing of the batteries that the user behavior results in, and provides a measure to describe to which level the driver fulfills the conditions for good "Eco-driving" regarding energy and ageing of batteries. The method further comprises a function that uses the measure related to good "Eco-driving" and based on that measure decides an appropriate maximum charging power, aiming to both short the charging times but also not increase the total ageing of the batteries. The maximum charging power from the evaluation functions is then used to define how quickly the vehicle is allowed to charge.

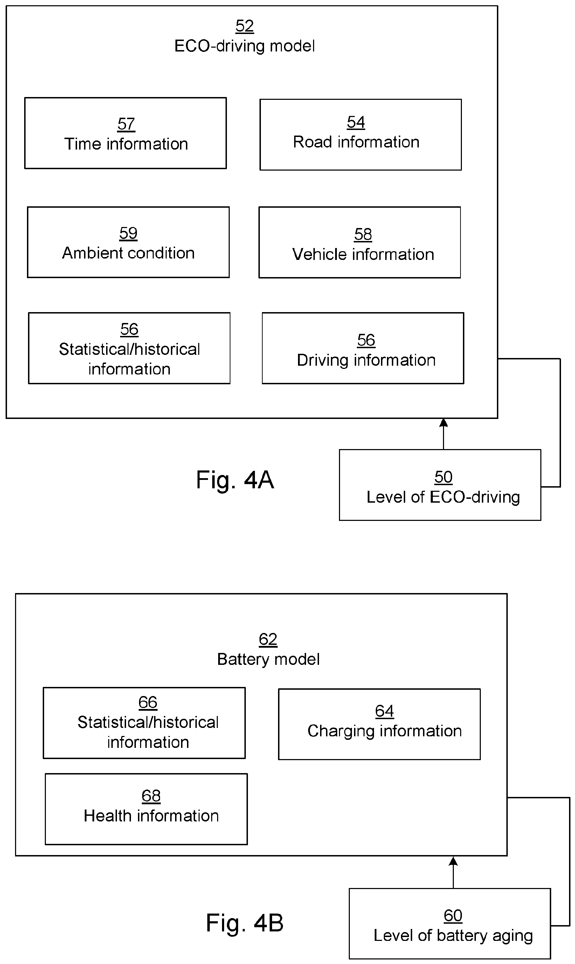

The different aspects of the method will now be described in even more in detail with reference to **FIGS. 4-8****.**

Examples of the ECO-driving model **52** will now be described with reference to **FIG. 4A****.** The ECO-driving model **52** may comprise different kinds of information, or parameters, directly or indirectly relating to ECO-driving of the vehicle.

The ECO-driving model **52** may comprise information relating to road information **54.** Road information **54** pertains to the road on which the vehicle is currently travelling on, roads that the vehicle **1** has been travelling on and/or road that the vehicle will travel on in the planned route. The road information **54** may for example relate to road inclination, temperature of the road, shape of the road, and/or surface of the road. The road inclination **54** may comprise information of upcoming changes in inclination of the road, for example if the inclination will be negative or positive, the maximum amount of inclination, a mean value of the inclination and/or the length of the inclination. The road inclination is preferably received from a navigation service. The temperature of the road preferably relates to temperature at a given location that the vehicle **1** has travelled. The temperature is preferably received from a weather forecast. The surface of the road may for example relate to the road surface roughness and/or road surface classification (gravel road, dirt road, asphalt road, etc.) of the road of the travelled route. The road surface may be uneven for many reasons, for example due to eroding roads, potholes, gravel road, dirt road, large water puddles on the road, ice and snow on the road, or oil spill on the road. The road surface information is preferably received from a navigation service. The road surface information may additionally or alternatively be received from one or more sensors arranged on the vehicle.

The ECO-driving model **52** may comprise information relating to driving information **56.** The driving information **56** may relate to how well the driver uses the kinetic energy of the vehicle. The driving information **56** may comprise information relating to one or more of: number of sudden accelerations of the vehicle **1,** number of sudden decelerations of the vehicle **1,** frequency of sudden accelerations of the vehicle **1,** frequency of sudden decelerations of the vehicle **1,** sudden stop of the vehicle **1,** speed of the vehicle **1,** use of regenerative braking functionalities, and use of cruise control functionalities. Furthermore, the driving information **56** may comprise information relating to the use of air-condition, and other similar features of the vehicle **1.**

The ECO-driving model **52** may comprise information relating to vehicle information **58.** The vehicle information **58** may for example relate to the weight of the vehicle, the type of vehicle, and/or fuel consumption of the vehicle. The weight of the vehicle may be a measured value (such as measured in tons or kilos) and/or information relating to the load of the vehicle (fully loaded, half-loaded or no goods). Vehicle information **58** may be received by different sensors arranged on the vehicle, such as weight sensors.

The ECO-driving model **52** may comprise information relating to the ambient condition **59** of the vehicle. The ambient condition **59** may for example be humidity, temperature and/or precipitation. The humidity may be a current value, a historical value and/or a prediction of upcoming humidity based on weather data. The humidity may account for fog and mist and may also be referred to as moisture. The temperature may be the temperature of the road and/or the temperature surrounding the vehicle. The temperature may be a current value, a historical value and/or an estimation of upcoming temperature based on weather data. Precipitation may for example be rain, drizzle, sleet, snow, ice pellets, graupel and hail. The precipitation may be a current value, a historical value and/or an estimation of upcoming precipitation based on weather data.

The ECO-driving model **52** may comprise information relating to time **57.** The time may relate to the time of year, such as the month of the year or the season of the year (spring, summer, autumn, winter). The time of year may affect the precipitation, the outdoor temperature, atmospheric humidity and road salting. The time may further relate to the time of the day, such as a specific time or time range (morning, midday/noon, afternoon evening, night). The time of day may affect the precipitation, outdoor temperature and atmospheric humidity.

The ECO-driving model **52** may comprise information relating to statistical data and/or historical data **56.** The statistical data and historical data **56** may for example relate to previous driving information, vehicle information and/or road information. This information could be combined or used alone. As an example, the statistical data and historical data **56**may relate to previous brake events for a given route, previous brake events for a given weight of the vehicle, previous brake events for a given speed of the vehicle, previous brake events for a given road inclination, and previous brake events for a given road information.

As should be understood, the ECO-driving model **52** could comprise a plurality of different parameters as has been mentioned above. In one model, all parameters are present whereas some models only one or two parameters are needed to generate an accurate ECO-driving model. Different parameters may be weighted differently.

The ECO-driving model **52** is used to determine a level of ECO-driving **50** of the vehicle 1. The level of ECO-driving **50** may be defined in the form of a percentage or a fixed number. For example, the ECO-driving level may be 80%, indicating that the driver is driving approximately 80% ECO-friendly. 100% ECO-driving is the baseline where the ECO-driving is theoretically optimized. In another example, the ECO-level may be defines as "low", "medium" or "high". In yet one example, the ECO-level may be defined as a number, for example between 1 -5, where 1 is the lowest level of ECO-driving and 5 is the highest level of ECO-driving.

Examples of the battery model **62** will now be described with reference to **FIG. 4B****.** The battery model **62** may comprise different kinds of information, or parameters, directly or indirectly relating to the one or more battery cells **10,** battery modules **20** or battery packs **30** of the vehicle **1.**

The battery model **62** may comprise information relating to charging information **64** of the one or more battery cells **10,** battery modules **20** or battery packs **30** of the vehicle **1.** Charging information **64** may comprise information of previous charging time, previous charging power, expected upcoming charging time, expected upcoming charging time, and/or current charging status.

The charging information **64** may include information of how many times the battery is charged within a predetermined time. The charging information **64** may further include the amount of energy at the start of charging the battery. The charging information **64** may include information relating to the charging mode such as a quick charging mode, normal charging mode, or slow charging mode.

The battery model **62** may further comprise information relating to the health status **68** of the one or more batteries. The health status **68** may comprise information relating to the temperature of the battery. The battery is preferably in operative communication with a temperature sensor, such as the battery cell temperature sensor **50** or the ambient battery sensor described earlier. The health status **68** may comprise information relating to the current or voltage in the battery. The battery may be in operative communication with a voltage sensor and/or a current sensor. The voltage and current information may be used to assess the health status of the battery. The health status **68** may further comprise information relating to possible overcharging of the battery (i.e. when the battery is fully charged but still connected to the charging device) and/or to possible situations where the battery is 0% charged (over-discharging).

The battery model **62** may comprise information relating to statistical data and/or historical data **66.** The statistical data and historical data **66** may for example relate to battery usage history information. Such information may relate to historical/statistical data of the health of the battery, of charging patterns, vehicle information and/or driving information. This information could be combined or used alone. As an example, the statistical data and historical data may relate to previous charging events at a given time frame, previous temperature data, and previous charging events for a given location.

As should be understood, the battery model **62** could comprise a plurality of different parameters as has been mentioned above. In one model, all parameters are present whereas some models only one or two parameters are needed to generate an accurate battery model **62.** Different parameters may be weighted differently.

The battery model **62** is used to determine a level of battery aging **60** of the vehicle **1.** The level of battery aging **60** may be defined in the form of a percentage or a fixed number. For example, the level of battery aging **60** may be 80%, indicating that the battery aging is approximately 80% aged. 100% aging is the baseline where the aging is theoretically completed, i.e. when the battery stops working properly due to high age or high usage. In another example, the level of battery aging **60** may be defines as "low", "medium" or "high". In yet one example, the level of battery aging **60** may be defined as a number, for example between 1 -5, where 1 is the lowest aging level and 5 is the highest aging level.

As is shown in **FIGS. 4A-B****,** both the ECO-driving model **52** and the battery model **62** can be continuously and/or dynamically updated. This update is preferably performed autonomously. This could for example be achieved by a neural network.

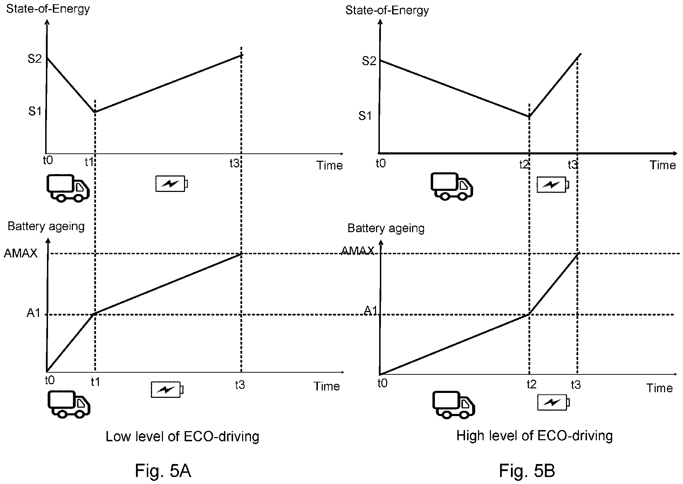

Based on the ECO-driving level **50** and the level of battery aging **60,** a maximum allowable charging condition **70** of the at least one battery pack **30** is determined for the vehicle **1.** The aim of the maximum allowable charging condition **70** is to be able to control the aging of the battery pack. The maximum allowable charging condition **70** may include the maximum allowable charging power of the battery pack **30,** and/or a minimum allowable charging time of the battery pack **30.** For example, the maximum allowable charging condition 70 may include a maximum allowable charging power and a minimum allowable charging time. As an illustrative example only, the minimum allowable charging time may for example range between 20 minutes to 10 hours. This will now be illustrated and discussed further with reference to **FIGS. 5-6****.**

**FIGS. 5A-B** illustrates to different scenario of driving a vehicle and charging the battery of said vehicle **1.** **FIG 5A** illustrates an example where the vehicle is driven in a non ECO-driving mode, hence the level of ECO-driving is low. The state-of-energy and the battery ageing is shown over time. The vehicle **1** is driven in a way that has a low level of ECO-driving during time **t0** - **t1**. At time **t1,** the vehicle **1** is stopped and the vehicle is charged. The vehicle **1** is charged during a time period **t1 - t3.** The time and/or efficiency of the charging is established based on the ECO-driving level and the level of battery aging.

At time **t3,** the battery ageing of the at least one battery pack **30** in the vehicle has reached a maximum aging level **AMAX.** As can be seen in the exemplary illustration, the majority of the battery aging occurs during driving, when the vehicle is driven in a way that has a low level of ECO-driving.

**FIG. 5B** illustrates an example where the vehicle is driven in an ECO-driving mode, hence the level of ECO-driving is high. The state-of-energy and the battery ageing is shown over time. The vehicle **1** is driven in a way that has a high level of ECO-driving during time **t0 - t2**. At time **t2,** the vehicle **1** is stopped and the vehicle is charged. The vehicle **1** is charged during a time period **t2 - t3.** The time and/or efficiency of the charging is established based on the ECO-driving level and the level of battery aging. At time **t3,** the battery ageing of the at least one battery pack **30** in the vehicle has reached a maximum aging level **AMAX.** As can be seen in the exemplary illustration, the majority of the battery ageing occurs during charging, when the vehicle is driven in a way that has a high level of ECO-driving.

As can be seen in **FIG. 5A****,** the battery ageing **A1** is achieved after driving a time **t1.** The same level of battery ageing **A1** is achieved in **FIG. 5B** after driving a time **t2.** In this example, time **t2** is longer than time **t1**.

In both examples, the same level of battery aging, **AMAX,** is achieved for the same time period. This is made possible by determining the maximum allowable charging condition of the at least one battery pack **30** for the vehicle, and thus controlling the charging conditions based on the evaluated level of ECO-driving and battery aging.

As can be seen in **FIG. 5A****,** the state of energy **S1** is achieved after driving a time **t1**. The same level of state of energy **S1** is achieved in **FIG. 5B** after driving a time **t2.** In this example, time **t2** is longer than time **t1.** As can be seen in **FIG. 5A****,** the state of energy **S2** is achieved after driving a time **t3.** The same level of state of energy **S3** is achieved in **FIG. 5B** after driving a time **t3.** In this example, time **t3** is longer than time **t1** and **t2.**

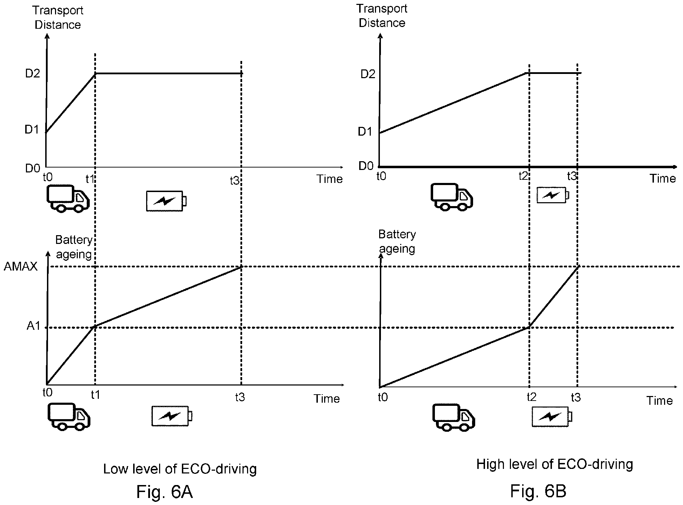

**FIGS. 6A-B** illustrates two different scenario of driving a vehicle and charging the battery of said vehicle 1. **FIG 6A** illustrates an example where the vehicle is driven in a way were the level of ECO-driving is low. The transport distance and the battery ageing is shown over time. The vehicle **1** is driven in a way that has a low level of ECO-driving during time **t0** - **t1.** During this time, the vehicle travels a transport distance from **D1**- **D2.** At time **t1**, the vehicle **1** is stopped and the vehicle is charged. The time and/or efficiency of the charging is established based on the ECO-driving level and the level of battery aging. The vehicle **1** is charged during a time period **t1 - t3.** At time **t3,** the battery ageing of the at least one battery pack **30** in the vehicle has reached a maximum aging level **AMAX.** As can be seen in the exemplary illustration, the majority of the battery aging occurs during driving, when the vehicle is driven in a way that has a low level of ECO-driving.

**FIG. 6B** illustrates an example where the vehicle is driven in way so that the level of ECO-driving is high. The transport distance and the battery ageing is shown over time. The vehicle **1** is driven in a way that has a high level of ECO-driving during time **t0 - t2**. During this time, the vehicle travels a transport distance from **D1**- **D2.** At time **t2,** the vehicle **1** is stopped and the vehicle is charged. The time and/or efficiency of the charging is established based on the ECO-driving level and the level of battery aging. The vehicle **1** is charged during a time period **t2 - t3.** At time **t3,** the battery ageing of the at least one battery pack **30** in the vehicle has reached a maximum aging level **AMAX.** As can be seen in the exemplary illustration, the majority of the battery aging occurs during charging, when the vehicle is driven in a way that has a high level of ECO-driving.

As can be seen in **FIG. 6A****,** the battery ageing **A1** is achieved after driving a time **t1.** The same level of battery ageing **A1** is achieved in **FIG. 6B** after driving a time **t2.** In this example, time **t2** is longer than time **t1**.

In both examples, the same level of battery aging, **AMAX,** is achieved for the same time period. This is made possible by determining the maximum allowable charging condition of the at least one battery pack **30** for the vehicle, and thus controlling the charging conditions based on the evaluated level of ECO-driving and battery aging.

As can be seen in **FIG. 6A****,** the transport distance **D2** is achieved after driving a time **t1**. The same transport distance **D2** is achieved in **FIG. 6B** after driving a time **t2.** In this example, time **t2** is longer than time **t1.** As can be seen in **FIGS. 6A-B****,** the transport distance **D2** is maintained during charging.

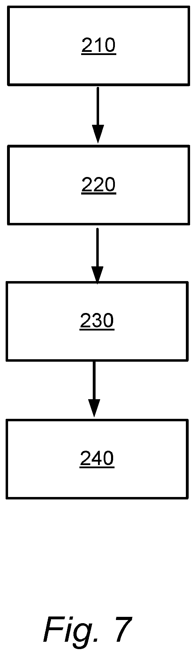

**FIG.** 7 is another view of **FIG. 3****,** according to an example. The method comprises determining **210,** by a processor device of a computer system, a level of ECO-driving **50** of the vehicle **1** and determining **220,** by the processor device, a level of battery aging **60** of the at least one battery pack **30** of the vehicle. The determination of the battery level is preferably based on a battery model **62.** The method further comprises determining **230,** by the processor device, a maximum allowable charging condition **70** of the at least one battery pack **30.** The determination is based on the level of ECO-driving **50** and the level of aging **60** of the battery pack **30.** The method further comprises controlling **24** the charging of the at least one battery pack **30** based on the maximum allowable charging condition **70** in order to control the aging of the battery pack.

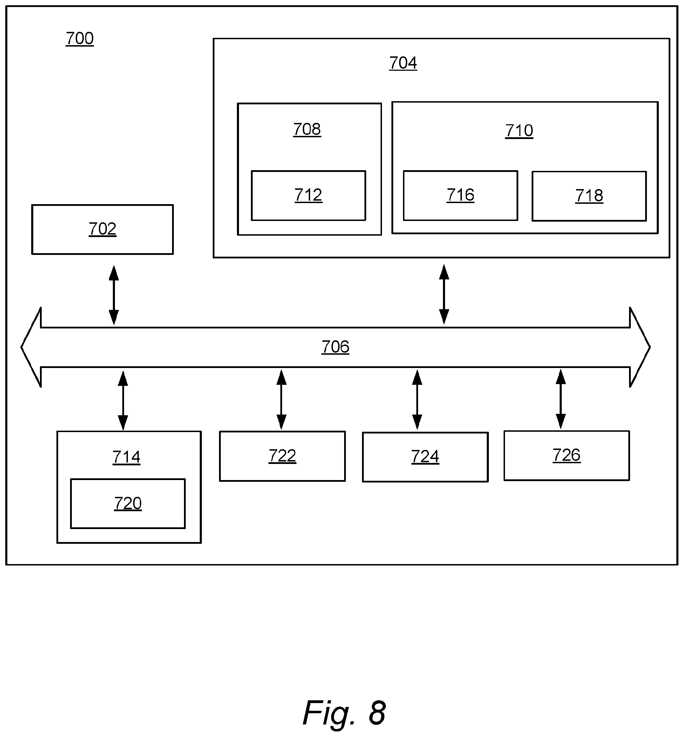

**FIG. 8** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with a processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The number of module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program product **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out the steps described herein. Thus, the computer-readable program code can comprise software instructions for implementing the functionality of the examples described herein when executed by the processing circuitry **702.** The processing circuitry **702** may serve as a controller or control system for the computer system **700** that is to implement the functionality described herein.

The computer system **700** also may include an input device interface **722** (e.g., input device interface and/or output device interface). The input device interface **722** may be configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may also include a communications interface **726** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Example 1: A computer system comprising a processor device configured to: determining, by a processor device of a computer system, a level of ECO-driving of the heavy-duty vehicle, determining, by the processor device, a level of battery aging of an energy storage system of the heavy-duty vehicle, wherein said determination is based on a battery model, determining, by the processor device, a maximum allowable charging condition of the energy storage system, wherein the determination is based on the level of ECO-driving and the level of aging of the energy storage system, controlling the charging of the energy storage system based on the maximum allowable charging condition in order to control the aging of the energy storage system.

Example 2: A computer-implemented method for automatically controlling the charging of an energy storage system in an electric heavy-duty vehicle, the method comprises:
determining, by a processor device of a computer system, a level of ECO-driving of the heavy-duty vehicle, determining, by the processor device, a level of battery aging of the energy storage system of the heavy-duty vehicle, wherein said determination is based on a battery model, determining, by the processor device, a maximum allowable charging condition of the energy storage system, wherein the determination is based on the level of ECO-driving and the level of aging of the energy storage system and controlling the charging of the energy storage system based on the maximum allowable charging condition in order to control the aging of the energy storage system.

Example 3: The method of example 2, wherein the maximum allowable charging condition of the energy storage system comprises the maximum allowable charging power of the energy storage system and/or a minimum allowable charging time of the energy storage system.

Example 4: The method of example 2 or 3, wherein the battery model is at least obtained in dependence of historical data of the usage of the energy storage system and/or statistical data of the usage of the energy storage system.

Example 5: The method of example 2-4, the battery model comprises data relating to health information of the energy storage system, and/or charging information of the energy storage system.

Example 6: The method of example 2-5, the battery model is continuously updated.

Example 7: The method of example 2 - 6, the level of ECO-driving is based on an ECO-driving model.

Example 8: The method of example 7, the ECO-driving model comprises data relating to road information, vehicle information and/or driving information of the travelled route of the vehicle.

Example 9: The method of example 6-8, the ECO-driving model comprises information relating to one or more of: the number of sudden accelerations of the vehicle, number of sudden decelerations of the vehicle, frequency of sudden accelerations of the vehicle, frequency of sudden decelerations of the vehicle, sudden stop of the vehicle, and speed of the vehicle.

Example 10: The method of example 6-9, the ECO-driving model is continuously updated.

Example 11: The method of example 2 - 9, wherein the determination of the maximum allowable charging condition of the energy storage system is determined so that a constant aging of the energy storage system is achieved.

Example 12: The method of example 2 - 10, wherein the determination of the maximum allowable charging condition of the energy storage system is determined so that a high level of ECO-driving results in a high maximum allowable charging condition and that a low level of ECO-driving results in a low maximum allowable charging condition.

Example 13: The method of example 2 - 12, wherein the energy storage system comprises at least one battery pack, the at least one battery pack comprises at least two battery modules, and wherein said at least two battery modules each comprises at least two battery cells.

Example 14: The method of example 2 - 13, wherein controlling the charging of the energy storage system is performed by instructing a charging station to provide power to the energy storage system.

Example 15: The method of example 2 - 14, wherein controlling the charging of the energy storage system is performed by instructing a battery management system to allow power to the energy storage system.

Example 16: The method of example 2 - 15, wherein the battery model is based on received sensor data from a battery management system.

Example 17: A heavy-duty vehicle comprising a processing device configured to perform the method of example 2-13.

Example 18: A program product comprising program code for performing, when executed by a processing device, the method of example 2-13.

Example 19: A control system comprising one or more control units configured to perform the method of example 2-16.

Example 20: A non-transitory computer-readable storage medium comprising instructions, which when executed by the processor device, cause the processor device to perform the method of example 2-16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising a processor device configured to:
determining (210), by a processor device of a computer system, a level of ECO-driving (50) of the heavy-duty vehicle (1);
determining (220), by the processor device, a level of battery aging (60) of an energy storage system (40) of the heavy-duty vehicle (1), wherein said determination is based on a battery model (62);
determining (230), by the processor device, a maximum allowable charging condition (70) of the energy storage system (40), wherein the determination is based on the level of ECO-driving (50) and the level of aging (60) of the energy storage system (40);
controlling (240) the charging of the energy storage system (40) based on the maximum allowable charging condition (70) in order to control the aging of the energy storage system (40).

2. A computer-implemented method (100) for automatically controlling the charging of an energy storage system (40) in an electric heavy-duty vehicle (1), the method (100) comprises:
determining (210), by a processor device of a computer system, a level of ECO-driving (50) of the heavy-duty vehicle (1);
determining (220), by the processor device, a level of battery aging (60) of the energy storage system (40) of the heavy-duty vehicle (1), wherein said determination is based on a battery model (62);
determining (230), by the processor device, a maximum allowable charging condition (70) of the energy storage system (40), wherein the determination is based on the level of ECO-driving (50) and the level of aging (60) of the energy storage system (40);
controlling (240) the charging of the energy storage system (40) based on the maximum allowable charging condition (70) in order to control the aging of the energy storage system (40).

3. The method (100) according to claim 2, wherein the maximum allowable charging condition of the energy storage system (40) comprises the maximum allowable charging power of the energy storage system (40) and/or a minimum allowable charging time of the energy storage system (40).

4. The method according to any one of claims 2-3, wherein the battery model (62) is at least obtained in dependence of historical data of the usage of the energy storage system (40) and/or statistical data of the usage of the energy storage system (40).

5. The method according to any one of claims 2-4, wherein the battery model (62) comprises data relating to health information (68) of the energy storage system (40), and/or charging information (64) of the energy storage system (40).

6. The method according to any one of claims 2-5, wherein the battery model (62) is continuously updated.

7. The method according to any one of claims 2-6, wherein the level of ECO-driving (50) is based on an ECO-driving model (52), said ECO-driving model (52) is at least obtained in dependence of historical data and/or statistical data (56) of the travelled route of the vehicle (1).

8. The method according to claim 7, wherein the ECO-driving model (52) comprises data relating to road information (54), vehicle information (58) and/or driving information (56) of the travelled route of the vehicle (1).

9. The method according to any one of claims 7-8, wherein the ECO-driving model (52) comprises information relating to one or more of: the number of sudden accelerations of the vehicle (1), number of sudden decelerations of the vehicle (1), frequency of sudden accelerations of the vehicle (1), frequency of sudden decelerations of the vehicle (1), sudden stop of the vehicle (1), and speed of the vehicle (1).

10. The method according to any one of claims 7-9, wherein the ECO-driving model (52) is continuously updated.

11. The method according to any one of claims 2 - 10, wherein the determination of the maximum allowable charging condition (70) of the energy storage system (40) is determined so that a constant aging of the energy storage system (40) is achieved.

12. An electric heavy-duty vehicle (1) comprising a processing device configured to perform the method (200) according to any one of the claims 2 to 11.

13. A computer program product comprising program code for performing, when executed by a processing device, the method (200) according to any one of the claims 2 to 11.

14. A control system comprising one or more control units configured to perform the method (200) according to any one of the claims 2 to 11.

15. A non-transitory computer-readable storage medium comprising instructions, which when executed by a processing device, cause the processing device to perform the method of claims 2-11.
